# EUROPEAN PATENT SPECIFICATION

(11) **EP 3 955 235 B1**
(45) Date of publication and mention of the grant of the patent: **22.01.2025**
(21) Application number: 20788306.7
(22) Date of filing: 11.04.2020
(51) Int. Cl.: G09B 23/28, G09B 23/30, A61C 19/00, G09B 23/34

(54) **MODEL FOR TEACHING IN DENTAL DISCIPLINES**
MODELL ZUM LEHREN VON DENTALEN DISZIPLINEN
MODÈLE POUR L'ENSEIGNEMENT DANS DES DISCIPLINES ODONTOLOGIQUES

(30) Priority: 12.04.2019 ES 201930338
(43) Date of publication of application: 16.02.2022
(73) Proprietor: Fundacion Universitaria San Antonio, 30107 Guadalupe - Murcia (ES)
(72) Inventor: GRANERO MARÍN, José Manuel, 30107 GUADALUPE (MURCIA) (ES); MELENDRERAS RUIZ, Raul, 30107 GUADALUPE (MURCIA) (ES); MELENDRERAS RUIZ, Rafael, 30107 GUADALUPE (MURCIA) (ES); RIERA ALVAREZ, Diego, 30107 GUADALUPE (MURCIA) (ES); JIMÉNEZ SOTO, Raul, 30107 GUADALUPE (MURCIA) (ES); GARCÍA COLLADO, Ángel, 30107 GUADALUPE (MURCIA) (ES)
(74) Representative: Díaz Pacheco, Maria Desamparados
(86) International application number: PCT/ES2020/070235
(87) International publication number: WO 2020/208284

(56) References cited:
- EP-A1- 2 011 450
- WO-A1-97/34278
- WO-A1-97/34278
- GB-A- 2 545 885
- GB-A- 2 545 885
- JP-A- 2005 234 250
- JP-A- S61 103 184
- KR-A- 20080 042 071
- RU-U1- 180 218
- US-A1- 2014 030 685
- US-A1- 2016 365 008
- DATABASE WPI Week 56683, Derwent World Patents Index; AN 2018-56683K

## Description

### OBJECT OF THE INVENTION

As expressed in the title of the present specification, the invention relates to a model for teaching in dental disciplines providing for the function for which it is intended advantages and features which are described in detail below and represent an improvement of the current state of the art.

Specifically, the object of the present invention relates to a model for teaching which reproduces a part of the human or animal stomatognathic system, where said part may consist of a single tooth, several teeth, or a jaw bone including or not including teeth, the part basically being distinguished by the fact that it is manufactured from structures which, by imitating the different tissues or states of same which they reproduce so as to provide realism when a student uses same for practice, comprise differentiated areas, which will be one or the other depending on the specific discipline for which the several variants of each model are intended, with different mechanical properties defined by a different density and possibly a different colour. Specifically, the model of the invention contemplates an embodiment variant with a structure specifically applicable for learning dental anatomy, a variant for learning the opening of cavities and/or predefined dental preparations, and a variant for learning the removal of carious dental tissue. The model also preferably has means for attaching same to a phantom and allowing the student to practice in his/her real position to perform the work.

### FIELD OF APPLICATION OF THE INVENTION

The field of application of the present invention is comprised within the sector of the industry dedicated to the manufacture of models for teaching, focusing particularly on the field of models intended for the practice of dental disciplines.

### BACKGROUND OF THE INVENTION

Today, there are different types of anatomical models for teaching practices in different fields, including dentistry.

On the other hand, in most practical dental pathology and therapeutics programmes at universities, bars of soap, wax, or other materials are used to acquire said anatomical knowledge and cutting skills, with there being problems relating to proportionality, size, and variations of the anatomical structures, and therefore the work of the student is limited to only carving without any guides until a structure similar to the real anatomical model is obtained, given that anatomical learning models by means of subtraction techniques are not available.

In terms of dental models, there is a large variety of dental models today which faithfully reproduce the natural anatomy of each tooth, allowing students to open and design cavities and/or preparations. Frasaco^{®} offers a wide range of educational products with study materials, just like Nissin Dental Products INC.

The main problem is that these dental models reproduce healthy teeth with an anatomy that is free of caries, i.e., of carious teeth on which the student can experience the feeling of making a cut, opening cavities and/or preparations, according to the specifications established by Black (G.V. Black, 1895), or specific preparations described by the teacher for the purpose of acquiring the skill required in handling cutting instruments; however, the absence of defined limits and an established cutting pattern leads to the student making inaccurate, out-of-proportion cavities and/or preparations during practice, and ultimately to him/her failing to acquire the skill needed to suitably guide the cutting instrument.

Nissin Dental has on the market operative jaw model CON2001-UL-SP-FEM-32 and operative jaw model CON2001-UL-UP-FEM-32, both for the purpose of learning surgical techniques, but without defining the area to be removed, and therefore without any precise motor leaning capacity.

Like Nissin Dental, Frasaco makes available dental models of healthy teeth which correspond with a typical natural set of adult teeth made from hard plastic, and it is described that these models are primarily used for practicing preventive, conservative, and prosthodontics dentistry given that, since the teeth are healthy natural teeth, they allow any type of manipulation with cutting instruments, and therefore these models offer neither the possibility of performing psychomotricity exercises nor the possibility of acquiring precision in the handling of cutting instruments.

The objective of the present invention is therefore to provide an improved type of models for teaching which allows for added realism in the student's practice through a more faithful reproduction of the different mechanical properties of the different tissues and areas of the part of the buccal or dental system to be treated.

Moreover, and as a reference to the current state of the art, it should be pointed out that at least the applicant is unaware of the existence of any other model for teaching in dental disciplines or any other invention with a similar application having technical, structural, and constitutive features that are identical or similar to those of the model herein claimed. Document EP2011450A1 discloses a tooth which is used in a dental arch model with which dental students can experience dental works in the oral cavity and practice treatments.

### DESCRIPTION OF THE INVENTION

The present invention relates to a model for teaching in dental disciplines as defined in the sole independent claim 1.

The model for teaching in dental disciplines proposed by the invention allows the described drawbacks of the current models to be solved and the objectives indicated above to be achieved in a satisfactory manner, with the characterising details making it possible and suitably distinguishing it being described in the final claims attached to the present description.

More specifically, as indicated above, the invention proposes a model for teaching that reproduces a part of the human or animal stomatognathic system, which part consists of either a set comprising a jaw and/or maxilla area or a portion thereof, including one or more teeth and/or edentulous areas, or else only a specific temporary or permanent tooth, or a group of two or more adjacent teeth, and the part basically being distinguished by the fact that it is manufactured from structures which, by imitating the different tissues which they reproduce and/or the natural or affected state of same, comprise areas with different mechanical properties differentiated from each other by the fact that they have at least a different density and possibly also a different colour, providing optimal realism when a student uses same for practice, also serving as a guiding system in certain cases so as to make it easier to learn the work to be performed.

It should be pointed out that the aforementioned areas of the model with the described different mechanical properties defined by a different density will be one or the other in each case, depending on the specific type of model and on the discipline for which it is intended, therefore the model has several variants applicable for learning different types of work, where they may have, in addition to a different density and different colour, a different porosity and/or different elasticity and/or different flexibility.

Specifically, the model of the invention contemplates a first embodiment variant with a structure specifically applicable for learning dental anatomy, a second embodiment variant in which the structure thereof is specifically designed for learning the opening of cavities and/or predefined dental preparations, and a third embodiment variant in which the structure of the model is specifically designed for learning the removal of carious dental tissue.

One, several, or all of the variants of the model object of the invention also preferably contemplate the inclusion of means for attaching same to a phantom, usually a head, and allowing the student to practice in his/her real position to perform the work.

Going into more detail of the invention, in a first embodiment variant applicable for learning dental anatomy, the model of the invention contemplates that the structure of the model reproduces a single tooth, several teeth, or a complete arch which, in order to allow the student to be able to acquire knowledge about the anatomical characteristics of each of the teeth to be treated by means of subtraction techniques with manual cutting materials, are integrated in an external body that can be "chipped off" or "broken away", has a different density and preferably also a different colour, and must be removed by the student until the inner tooth or teeth is/are exposed, where the inclusion of several teeth or groups of teeth of a different proportion integrated inside each other, logically from largest to smallest, may be contemplated, in which by means of the mentioned subtraction techniques, the student must expose the dental anatomical structure at different scales marked by density and colour changes, accessing smaller proportions or scales as he/she acquires anatomical expertise and instrument handling skill. Preferably, the external body is a polyhedron, although this does not represent a limitation.

More specifically, in this first embodiment variant applicable for learning the anatomy, the structure of the model reproduces a temporary or permanent human or animal tooth with a complete anatomical design included in a preferably polyhedral external body formed by a multi-colour composition which delimits similar dental structures in different scales of proportion (from largest to smallest) varying in hardness and density so as to improve the training in handling cutting instruments in different types of preparations.

The present invention allows the anatomical figure to be made by the student to be predefined by means of different colours which allow differentiating the different scales of size of the said anatomical figure preferably comprising:
- A polyhedral outer area to be removed, having a colour and density different from the rest, which upon removal will expose a dental anatomical form of a specific 3X scale tooth with a colour and density different from the colour and density of the outer area.
- A 3X scale tooth, which again can be removed with cutting instruments, having a colour and density different from the rest and will uncover the same anatomical figure in a 2X scale.
- A 2X scale tooth, which can likewise be removed with cutting instruments, having a colour and density different from the rest and will uncover the same anatomical figure in a real-life scale (approximately the size of a natural tooth), with anatomical characteristics identical to the preceding teeth.

The polyhedral shape of the external body in which the dental anatomical figure is included can vary in both shape and thickness, according to training or skill acquisition needs. Similarly, the sizes of scales may vary according to the sector for which the models are intended and to the skills in handling the cutting materials.

In a second embodiment variant for learning the opening of cavities and/or predefined dental preparations, the model allows acquiring the skill and precision necessary in the intraoral handling of both manual and rotary dental cutting instruments, for which the structure thereof reproduces a tooth or group of temporary or permanent teeth in which there is contemplated at least an area to be removed having a density different from the rest, and its shape, hardness, and density, as well as its colour, can vary depending on the educational needs for training in handling cutting instruments in different types of preparations.

This variant of the model of the invention therefore allows the preparation to be made by the student to be predefined by means of different densities and colours which allow the part of the tooth to be removed to be differentiated from the part to be preserved.

More specifically, in the preferred embodiment of this variant of the model, the structure reproduces a single tooth comprising:
- An area to be removed with cutting instruments, having a colour and density different from the rest.
- An area of the tooth to be preserved, having a colour and density different from the area to be removed.
- An intermediate area to be preserved, having a colour and/or density different from the rest and performing the function of an interphase between the area to be removed and the area to be preserved, establishing the limit up to which the student must spread the preparation.
- A base compatible with a phantom which allows insertion in practice models, for example Frasaco's ANA-4, AG-3 and A3.

The model of this variant for teaching the opening of cavities and/or predefined preparations can be developed individually, such that it can be attached to a phantom by means of a compatible base, or it can be developed such that it is a permanent part of a practice phantom, without the possibility of personalising the teeth.

Lastly, the model contemplates a third embodiment variant applicable for learning the removal of carious dental tissue which allows acquiring the skill necessary in the intraoral handling of both manual and rotary dental cutting instruments during the removal of carious tissue, both in the cases where only the hard tissue is affected and in the cases where the pulp tissue is also affected, for which the structure thereof reproduces a tooth or group of temporary or permanent teeth in which there is contemplated at least an area having a density different from the rest which imitates a caries lesion to be removed with cutting instruments.

In addition to reproducing healthy and sick tissue, in this variant, the model preferably also reproduces pulp tissue, such that the student must establish and apply real therapeutic criteria when removing the tissue in view of the possibility of finding or causing damaged pulp.

This variant therefore allows the student to make preparations in the models by means of removing hard tissue with dental cutting instruments and then performing the filling thereof using different restoration materials and techniques according to the needs generated in each case.

In the preferred embodiment of this variant, the structure of the model reproduces a single tooth comprising:
- An area to be removed with cutting instruments, having a density and consistency similar to the carious, infected, and irreversibly affected tissue.
- An area of the tooth to be preserved, having a density similar to a healthy tooth, and different from the density of the carious tissue area to be removed.
- An area to be preserved, having a density and consistency different from the rest which reproduces the area of the lesion to be preserved due to its ability to recover.
- A pulp tissue area, having a density and consistency different from the rest, with the capacity to reproduce the colour and vitality of healthy pulp and the possibility of incorporating sensors which record the damage caused by errors during hard tissue removal.
- A base compatible with a phantom which allows insertion in practice models, for example Frasaco's ANA-4, AG-3 and A3.

Like in the preceding variant, the model in this variant for teaching the removal of carious tissue can be developed individually, such that it can be attached to a phantom by means of a compatible connection, or it can be developed such that it is a permanent part of a practice phantom.

### DESCRIPTION OF THE DRAWINGS

To complement the description that is being made and for the purpose of helping to better understand the features of the invention, a set of drawings is attached to the present specification as an integral part thereof in which the following is depicted in a non-limiting, illustrative manner:

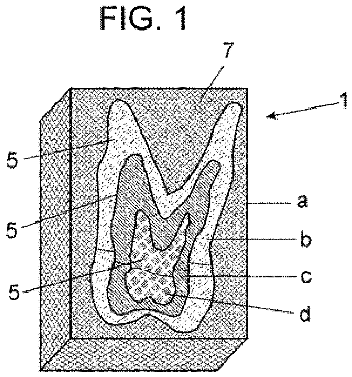

- Figure 1 shows a sectioned perspective view of another example of the model of the invention, specifically of a variant thereof applicable for learning dental anatomy by means of subtraction techniques, in which the configuration depicting the structure thereof with a different density, which in this case comprises several teeth of a different proportion integrated within an external body, can be seen;

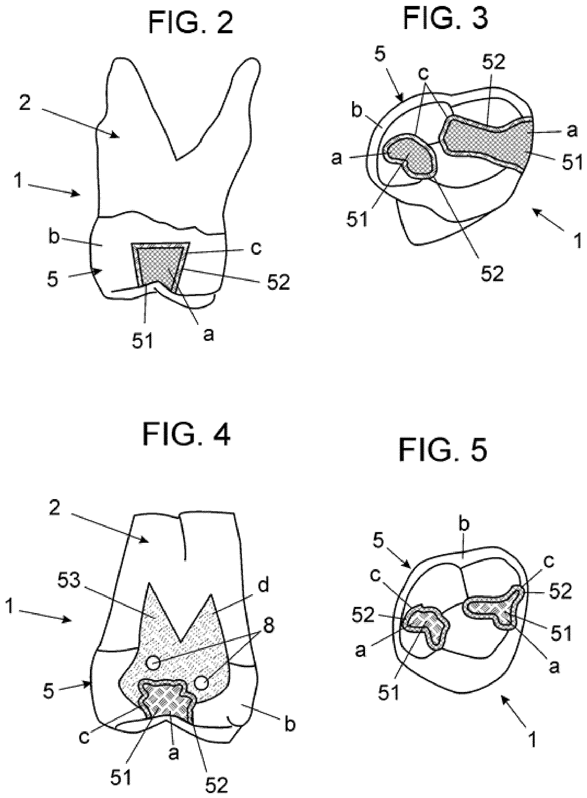

- Figures 2 and 3 show respective side and plan views, respectively, of an example of the model of the invention in another variant thereof applicable for learning the opening of cavities and/or predefined dental preparations, with this example reproducing in this case a tooth in which the configuration depicting the structure thereof with a different density in the area provided for making said cavity and the rest of the tooth can be seen; and
- Figures 4 and 5 show respective side and plan views, respectively, of another example of the model of the invention in another variant thereof applicable for learning the removal of carious dental tissue, with this example also reproducing a tooth in which the configuration depicting the structure thereof with a different density in the carious area and the rest of the tooth can be seen.

### PREFERRED EMBODIMENT OF THE INVENTION

In view of the mentioned figures and according to the numbering used, several non-limiting examples of the various embodiment variants of the proposed model for teaching in dental disciplines can be seen therein, which model comprises the parts and elements indicated and described in detail below.

In that sense, as can be seen in said figures, the model in question consists of a structure (1) that reproduces a part of the human or animal stomatognathic system, consisting of an upper and/or lower jaw bone (4) or a portion thereof, with or without teeth (5) and/or edentulous gum areas (6), or of a temporary or permanent tooth (5) or a group of adjacent teeth, and said model is distinguished by comprising two or more areas (a, b, c, d) with different mechanical properties, differentiated from each other by imitating the different tissues that they reproduce and/or the natural or affected state of same, having at least a different density and possibly also a different colour and/or porosity and/or elasticity and/or flexibility, depending on the specific type of model and on the discipline for which it is intended, providing realism and guidance when a student uses same for practice so as to make it easier to learn the work to be performed.

Furthermore, the structure (1) of the model object of the invention also preferably comprises compatible means (2) for attaching same to a practice phantom, usually a head.

Figure 1 shows how, in a first embodiment variant applicable for learning dental anatomy, the structure (1) of the model reproduces a tooth or several teeth (5) integrated within an external body (7) that the student must remove by means of subtraction techniques with cutting tools until said tooth or teeth (5) is/are exposed, and the density of which is different from the density which forms said tooth or teeth (5) constituting respectively the at least first and second areas (a, b) with different mechanical properties of the model which in this case serve as a guide when the student performs practice to learn about dental anatomy and instrument handling.

Optionally, in this embodiment variant of the model (1), the structure (1) comprises two or more teeth or groups of teeth (5) which are integrated, inside each other in different scales of proportion, from largest to smallest, within the external body (7) and which the student must successively expose by means of subtraction techniques accessing teeth having smaller proportions or scales, said inner teeth (5) constituting the corresponding third and fourth areas (c, d) with different mechanical properties which also have a different density with respect to each other and to the external body (7).

Furthermore, each of the teeth (5) successively incorporated inside each other and within the external body (7) constituting the aforementioned areas (a, b, c, d) with different mechanical properties in the structure (1) of the model are also preferably different in colours from each other.

In a preferred embodiment like the one shown in Figure 1, the structure (1) of the model in this variant comprises:
- A polyhedral outer body (7) to be removed, having a colour and density different from the rest, constituting a first area (a) with different mechanical properties.
- A 3X scale tooth (5), incorporated within the external body (7), which can also be removed with cutting instruments, having a colour and density different from the rest, constituting a second area (b) with different mechanical properties.
- A 2X scale tooth (5), incorporated within the 3X scale tooth (5) and can likewise be removed with cutting instruments, in turn having a colour and density different from the rest, constituting a third area (c) with different mechanical properties.
- And a life-size scale tooth (5), incorporated within the 2X scale tooth, having a colour and density different from the rest, constituting a fourth area (d) with different mechanical properties.

In a second embodiment variant, the structure (1) of the model is applicable for learning the opening of cavities and/or predefined dental preparations, and as can be seen in Figures 2 and 3 , it reproduces a tooth or group of temporary or permanent teeth (5) in which there is contemplated at least a first area (a) with different mechanical properties having a density different from the rest of the tooth or teeth (5) forming a part to be removed (5a) by the student, and its shape, hardness, and density, as well as its colour, can vary in each case, serving as a guide for differentiating the part of the tooth to be removed (5a) from the part that must be preserved using different techniques.

Preferably, the structure (1) also comprises a compatible base (2) for attaching same to a phantom so that the practice can be carried out in a more realistic position.

In a preferred embodiment of this variant of the model, the structure (1) reproduces a single tooth (5) comprising:
- A first area (a) with different mechanical properties, forming a part to be removed (51) with cutting instruments, having a colour and density different from the rest.
- A second area (b) with different mechanical properties to be preserved and having a colour and density different from the area to be removed mentioned above.
- A third area (c) with different mechanical properties, having a colour and/or density different from the rest and constituting an intermediate part (52) to be preserved which performs the function of an interphase between the part to be removed (51) and the rest of the tooth (5) to be preserved, corresponding to the respective first and second areas (a, b) with different mechanical properties, establishing a guide of the limit up to which the student must spread the preparation.
- And a base (2) compatible with a phantom.

The model of this variant for teaching the opening of cavities and/or predefined preparations preferably has a structure (1) which reproduces the tooth (5) individually, such that it can be attached to a phantom by means of the compatible base (2), as shown in Figures 4 and 5 , although optionally, said structure (1) can be a permanent part of the practice phantom itself, and the tooth (5) can be included along with other teeth found in a human or animal mouth.

Lastly, Figures 4 and 5 show how the model contemplates a third embodiment variant applicable for learning the removal of carious dental tissue, wherein the structure (1), like in the preceding variant, reproduces a tooth or group of teeth (5) in which there is contemplated at least a part with a caries lesion to be removed (51) with cutting instruments which constitutes a first area (a) with different mechanical properties and a different density with respect to the rest of said tooth (5) in turn constituting a second area (b) with different mechanical properties and a different density.

In the preferred embodiment of this variant, the structure (1) of the model reproduces a single tooth (5) comprising:
- a part to be removed (51) with cutting instruments, having a density and consistency similar to the carious, infected, and irreversibly affected tissue, which constitutes the first area (a) with different mechanical properties.
- a part of the rest of the tooth (5) to be preserved, having a density similar to a healthy tooth, and different from the density of the carious tissue area to be removed, constituting the second area (b) with different mechanical properties.
- an intermediate part (52) to be preserved, having a density and consistency different from the rest which reproduces the area of the lesion to be preserved due to its ability to recover, and constituting a third area (c) with different mechanical properties
- a pulp tissue part (53), having a density and consistency different from the rest, reproducing the colour and consistency of healthy pulp, constituting a fourth area (d) with different mechanical properties.

Optionally, said pulp tissue part (53) constituting this fourth area (d) incorporates sensors (8) which, when connected to a device (not depicted) provided to that end, record the damage caused by errors during the removal of hard tissue from the part to be removed (5a) of the tooth (5).

Preferably, in this variant, the structure (1) also has a base (2) compatible with a practice phantom, or alternatively is integrated in the phantom itself, being a permanent part thereof along with other teeth of a set of human or animal teeth.

Having sufficiently described the nature of the present invention, as well as the manner of putting it into practice, it is not considered necessary to expand on this explanation so that one skilled in the art will understand its scope and the advantages derived from it, hereby stating that within its essential nature, the invention may be carried out to practice in other embodiments which differ in detail from that indicated by way of example and which will likewise attain the protection that is sought provided that its fundamental principle is not altered, changed, or modified.

## Claims

1. A model for teaching in dental disciplines, consisting of a structure (1) that reproduces a part of the human or animal stomatognathic system, and comprising two or more areas (a, b...) with different mechanical properties, differentiated from each other by delimiting the different tissues that they reproduce and/or the natural or affected state of same and/or areas to be removed, which areas have at least a different density, based on the type and the discipline for which they are intended, providing realism and guidance when a student uses same for practice so as to make it easier to learn the work to be performed, wherein the structure (1) of the model reproduces a model selected from:
i) a tooth or several teeth (5) integrated within an external body (7) to be removed by means of subtraction techniques with cutting tools until said tooth or teeth (5) is/are exposed, the density of which is different from the density which forms said tooth or teeth (5), constituting respectively the at least first and second areas (a, b) with different mechanical properties of different density, for learning dental anatomy; or
ii) a tooth or group of temporary or permanent teeth (5) in which there is contemplated at least a first area (a) with different mechanical properties, having a density different from the rest of the tooth or teeth (5) forming a part to be removed (51) by the student, and its shape, hardness, and density, as well as its colour, vary from the rest that must be preserved, for learning the opening of cavities and/or predefined dental preparations; or
iii) a tooth or group of teeth (5) in which there is contemplated at least a part (51) with a caries lesion to be removed with cutting instruments which constitutes a first area (a) with different mechanical properties and different density with respect to the rest of said tooth (5) in turn constituting a second area (b) with different mechanical properties, for learning the removal of carious dental tissue.
**characterized in that,** in the variant for learning dental anatomy, the structure (1) comprises two or more teeth or groups of teeth (5) which are integrated, inside each other in different scales of proportion, from largest to smallest, within the external body (7) so that they are successively exposed by means of subtraction techniques accessing teeth having smaller proportions or scales, said inner teeth (5) constituting respective third and fourth areas (c, d) with different mechanical properties, which in turn have a different density with respect to each other and to the external body (7).

2. The model for teaching in dental disciplines according to claim 1, wherein the areas (a, b...) with different mechanical properties that the model comprises also have a different colour and/or porosity and/or elasticity and/or flexibility.

3. The model for teaching in dental disciplines according to claim 1 or 2, wherein said structure (1) also comprises compatible means for attaching same to a practice phantom.

4. The model for teaching in dental disciplines according to any of the previous claims, wherein each of the teeth (5) successively incorporated inside each other and within the external body (7) constituting the respective areas (a, b...) with different mechanical properties of the structure (1) are also different in colours from each other.

5. The model for teaching in dental disciplines according to claim 4, wherein the structure (1) comprises:
- a polyhedral outer body (7) to be removed, having a colour and density different from the rest, constituting a first area (a) with different mechanical properties,
- a 3X scale tooth (5), incorporated within the external body (7), which can also be removed with cutting instruments, having a colour and density different from the rest, constituting a second area (b) with different mechanical properties,
- a 2X scale tooth (5), incorporated within the 3X scale tooth (5), which can be removed with cutting instruments, in turn having a colour and density different from the rest, constituting a third area (c) with different mechanical properties, and
- a life-size scale tooth (5), incorporated within the 2X scale tooth, having a colour and density different from the rest, constituting a fourth area (d) with different mechanical properties.

6. The model for teaching in dental disciplines according to claim 1, wherein in the variant for learning the opening of cavities and/or predefined dental preparations, the structure (1) reproduces a single tooth (5) comprising:
- a first area (a) with different mechanical properties, forming a part to be removed (51) with cutting instruments, having a colour and density different from the rest,
- a second area (b) with different mechanical properties to be preserved, and having a colour and density different from the area to be removed mentioned above,
- a third area (c) with different mechanical properties, having a colour and/or density different from the rest and constituting an intermediate part (52) to be preserved between the part to be removed (51) and the part of the rest of the tooth (5) to be preserved.

7. The model for teaching in dental disciplines according to claim 1, wherein in the variant for learning the removal of carious dental tissue, the structure (1) comprises:
- a part to be removed (51) with cutting instruments, having a density and consistency similar to a carious, infected, and irreversibly affected tissue, constituting the first area (a) with different mechanical properties,
- a part of the rest of the tooth to be preserved (5), having a density similar to a healthy tooth and different from the density of the carious tissue area to be removed, constituting the second area (b) with different mechanical properties,
- an intermediate part (52) to be preserved, having a density and consistency different from the rest which reproduces the area of the lesion to be preserved due to its ability to recover, and constituting a third area (c) with different mechanical properties, and
- a pulp tissue part (53), having a density and consistency different from the rest, reproducing the colour and consistency of healthy pulp, constituting a fourth area (d) with different mechanical properties.

8. The model for teaching in dental disciplines according to claim 7, wherein said pulp tissue part (53) constituting this fourth area (d) incorporates sensors (8) which, when connected to a device provided to that end, record the damage caused by errors during the removal of hard tissue from the part to be removed (51) of the tooth (5).

9. The model for teaching in dental disciplines according to any of claims 6 to 8, wherein the structure (1) is integrated in a phantom, being a permanent part thereof along with other teeth.

## Patentansprüche

1. Modell zum Lehren von dentalen Disziplinen, bestehend aus einer Struktur (1), welche einen Teil des menschlichen oder tierischen stomatognathen Systems nachbildet, und umfassend zwei oder mehr Bereiche (a, b...) mit unterschiedlichen mechanischen Eigenschaften, welche sich voneinander unterscheiden, indem sie die unterschiedlichen Gewebe die sie nachbilden und/oder den natürlichen oder beeinträchtigen Zustand derselben und/oder zu entfernende Bereiche abgrenzen, Bereiche welche mindestens eine unterschiedliche Dichte aufweisen, basierend auf der Art und der Disziplin für die sie vorgesehen sind, sodass Realismus und Orientierung bereitgestellt wird, wenn ein Student dieselbe zum Üben verwendet, um es einfacher zu machen die durchzuführende Arbeit zu lernen, wobei die Struktur (1) des Modells ein Modell nachbildet, ausgewählt aus:
i) einem Zahn oder mehreren Zähnen (5), welche in einen äußeren Körper (7) integriert sind, welcher mittels Subtraktionstechniken mit Schneidwerkzeugen zu entfernen ist, bis der genannte Zahn oder die genannten Zähne (5) ausgesetzt ist/sind, dessen Dichte unterschiedlich von der Dichte ist, welche den genannten Zahn oder die genannten Zähne (5) bildet, jeweils unter Bildung der mindestens ersten und zweiten Bereiche (a, b) mit unterschiedlichen mechanischen Eigenschaften unterschiedlicher Dichte, um die Dentalanatomie zu lernen; oder
ii) einem Zahn oder einer Gruppe von provisorischen oder permanenten Zähnen (5), in welchen mindestens ein erster Bereich (a) mit unterschiedlichen mechanischen Eigenschaften betrachtet wird, aufweisend eine unterschiedliche Dichte als der Rest des Zahns oder der Zähne (5) unter Bildung eines vom Studenten zu entfernenden Teils (51), und dessen Form, Härte und Dichte, sowie dessen Farbe, vom Rest, welcher erhalten bleiben muss, abweicht, um das Öffnen von Kavitäten und/oder vordefinierte Dentalpräparate zu lernen; oder
iii) einem Zahn oder einer Gruppe von Zähnen (5), in welchen mindestens ein Teil (51) mit einer Kariesläsion, welche mit Schneidinstrumenten entfernt werden soll, betrachtet wird, welcher einen ersten Bereich (a) bildet, mit unterschiedlichen mechanischen Eigenschaften und unterschiedlicher Dichte in Bezug auf den Rest des genannten Zahns (5), welcher wiederum einen zweiten Bereich (b) mit unterschiedlichen mechanischen Eigenschaften bildet, um das Entfernen von kariösem Zahngewebe zu lernen;
**dadurch gekennzeichnet, dass** in der Variante zum Lernen der Dentalanatomie, die Struktur (1) zwei oder mehr Zähne oder Gruppen von Zähnen (5) umfasst, welche, ineinander in unterschiedlichen Skala-Verhältnissen, vom größten zum kleinsten, innerhalb des äußeren Körpers (7) integriert sind, sodass sie mittels Subtraktionstechniken nacheinander ausgesetzt werden, unter Zugang zu den Zähnen aufweisend kleineren Verhältnissen oder Skalen, wobei die genannten inneren Zähne (5) jeweilige dritte und vierte Bereiche (c, d) mit unterschiedlichen mechanischen Eigenschaften bilden, welche wiederum eine unterschiedliche Dichte in Bezug aufeinander und auf den äußeren Körper (7) aufweisen.

2. Modell zum Lehren von dentalen Disziplinen nach Anspruch 1, wobei die Bereiche (a, b...) mit unterschiedlichen mechanischen Eigenschaften, welche das Modell umfasst, auch eine unterschiedliche Farbe und/oder Porosität und/oder Elastizität und/oder Flexibilität aufweisen.

3. Modell zum Lehren von dentalen Disziplinen nach Anspruch 1 oder 2, wobei die genannte Struktur (1) auch kompatible Mittel zum Koppeln derselben mit einem Übungsphantom umfasst.

4. Modell zum Lehren von dentalen Disziplinen nach einem der vorhergehenden Ansprüche, wobei jeder der Zähne (5), welche nacheinander ineinander und innerhalb des äußeren Körpers (7) unter Bildung der jeweiligen Bereiche (a, b...) mit unterschiedlichen mechanischen Eigenschaften der Struktur (1) eingeschlossen werden, auch unterschiedlich voneinander in den Farben sind.

5. Modell zum Lehren von dentalen Disziplinen nach Anspruch 4, wobei die Struktur (1) Folgendes umfasst:
- einen zu entfernenden polyedrischen äußeren Körper (7), aufweisend eine unterschiedliche Farbe und Dichte als der Rest, unter Bildung eines ersten Bereichs (a) mit unterschiedlichen mechanischen Eigenschaften,
- einen 3X-Skala Zahn (5), welcher innerhalb des äußeren Körpers (7) eingeschlossen ist, welcher auch mit Schneidinstrumenten entfernt werden kann, aufweisend eine unterschiedliche Farbe und Dichte als der Rest, unter Bildung eines zweiten Bereichs (b) mit unterschiedlichen mechanischen Eigenschaften,
- einen 2X-Skala Zahn (5), welcher innerhalb des 3X-Skala Zahns (5) eingeschlossen ist, welcher mit Schneidinstrumenten entfernt werden kann, wiederum aufweisend eine unterschiedliche Farbe und Dichte als der Rest, unter Bildung eines dritten Bereichs (c) mit unterschiedlichen mechanischen Eigenschaften, und
- einen Zahn (5) mit lebensgroßer Skala, welcher innerhalb des 2X-Skala Zahns eingeschlossen ist, aufweisend eine unterschiedliche Farbe und Dichte als der Rest, unter Bildung eines vierten Bereichs (d) mit unterschiedlichen mechanischen Eigenschaften.

6. Modell zum Lehren von dentalen Disziplinen nach Anspruch 1, wobei in der Variante zum Lernen des Öffnens von Kavitäten und/oder vordefinierten Dentalpräparaten, die Struktur (1) einen einzigen Zahn (5) nachbildet, umfassend:
- einen ersten Bereich (a) mit unterschiedlichen mechanischen Eigenschaften, welcher einen mit Schneidinstrumenten zu entfernenden Teil (51) bildet, aufweisend eine unterschiedliche Farbe und Dichte als der Rest,
- einen zweiten Bereich (b) mit unterschiedlichen mechanischen Eigenschaften, welcher erhalten bleiben soll, und aufweisend eine unterschiedliche Farbe und Dichte als der zuvor erwähnte, zu entfernenden Bereich,
- einen dritten Bereich (c) mit unterschiedlichen mechanischen Eigenschaften, aufweisend eine unterschiedliche Farbe und/oder Dichte als der Rest und welcher einen Zwischenteil (52), welcher erhalten bleiben soll, bildet, zwischen dem zu entfernenden Teil (51) und dem Teil des Rests des Zahns (5), welcher erhalten bleiben soll.

7. Modell zum Lehren von dentalen Disziplinen nach Anspruch 1, wobei in der Variante zum Lernen des Entfernens von kariösem Zahngewebe, die Struktur (1) Folgendes umfasst:
- einen mit Schneidinstrumenten zu entfernenden Teil (51), aufweisend eine Dichte und Konsistenz ähnlich wie ein kariöses, infiziertes und irreversibel betroffenes Gewebe, welcher den ersten Bereich (a) mit unterschiedlichen mechanischen Eigenschaften bildet,
- einen Teil des Rests des Zahns (5), welcher erhalten bleiben soll, aufweisend eine Dichte ähnlich wie ein gesunder Zahn und unterschiedlich von der Dichte des zu entfernenden kariösen Gewebebereichs, welcher den zweiten Bereich (b) mit unterschiedlichen mechanischen Eigenschaften bildet,
- einen Zwischenteil (52), welcher erhalten bleiben soll, aufweisend eine Dichte und Konsistenz unterschiedlich vom Rest, welcher den Bereich der Läsion nachbildet, welcher aufgrund von seiner Fähigkeit sich zu erholen, erhalten bleiben soll, und welcher einen dritten Bereich (c) mit unterschiedlichen mechanischen Eigenschaften bildet, und
- einen Pulpagewebe-Teil (53), aufweisend eine Dichte und Konsistenz unterschiedlich vom Rest, welcher die Farbe und Konsistenz der gesunden Pulpa nachbildet, welcher einen vierten Bereich (d) mit unterschiedlichen mechanischen Eigenschaften bildet.

8. Modell zum Lehren von dentalen Disziplinen nach Anspruch 7, wobei der genannte Pulpagewebe-Teil (53), welcher diesen vierten Bereich (d) bildet, Sensoren (8) einschließt, welche, wenn mit einer dafür vorgesehenen Vorrichtung verbunden werden, den Schaden erfassen, welcher durch Fehler während des Entfernens des Hartgewebes vom zu entfernenden Teil (51) des Zahns (5) hervorgerufen werden.

9. Modell zum Lehren von dentalen Disziplinen nach einem der Ansprüche 6 bis 8, wobei die Struktur (1) in ein Phantom integriert ist, wobei sie zusammen mit anderen Zähnen ein permanenter Teil desselben ist.

## Revendications

1. Modèle pour l'enseignement dans des disciplines odontologiques, constitué d'une structure (1) qui reproduit une partie du système stomatognathique humain ou animal, et comprenant deux ou plusieurs zones (a, b...) avec des propriétés mécaniques différentes, différenciées les unes des autres par délimitation des différents tissus qu'elles reproduisent et/ou par l'état naturel ou affecté de ceux-ci et/ou des zones à retirer, ces zones ayant au moins une densité différente, en fonction du type et de la discipline à laquelle elles sont destinées, fournissant un réalisme et un guidage lorsqu'un étudiant l'utilise pour la pratique afin de faciliter l'apprentissage du travail à réaliser, dans lequel la structure (1) du modèle reproduit un modèle choisi parmi :
i) une dent ou plusieurs dents (5) intégrées au sein d'un corps externe (7) à retirer par le biais de techniques de soustraction avec des outils de coupe jusqu'à ce que ladite dent ou lesdites dents (5) soient exposées, dont la densité est différente de la densité qui forme ladite dent ou lesdites dents (5), constituant respectivement l'au moins première et deuxième zones (a, b) avec des propriétés mécaniques différentes de densité différente, pour apprendre l'anatomie dentaire ; ou
ii) une dent ou un groupe de dents temporaires ou permanentes (5) dans lesquelles on prévoit au moins une première zone (a) avec des propriétés mécaniques différentes, ayant une densité différente du reste de la dent ou les dents (5) formant une partie à retirer (51) par l'étudiant, et sa forme, sa dureté, et sa densité, ainsi que sa couleur, varient par rapport au reste qui doit être préservé, pour apprendre l'ouverture de cavités et/ou de préparations dentaires prédéfinies ; ou
iii) une dent ou un groupe de dents (5) dans lesquelles on prévoit au moins une partie (51) avec une lésion carieuse à retirer avec des instruments de coupe qui constitue une première zone (a) avec des propriétés mécaniques différentes et une densité différente par rapport au reste de ladite dent (5) qui constitue à son tour une deuxième zone (b) avec des propriétés mécaniques différentes, pour apprendre le retrait de tissu dentaire carieux ;
**caractérisé en ce que**, dans la variante pour apprendre l'anatomie dentaire, la structure (1) comprend deux ou plusieurs dents ou groupes de dents (5) qui sont intégrées, les unes à l'intérieur des autres dans des différentes échelles de proportion, de la plus grande à la plus petite, au sein du corps externe (7) de sorte qu'elles sont exposées successivement par le biais de techniques de soustraction accédant à des dents ayant des proportions ou des échelles plus petites, lesdites dents intérieures (5) constituant une troisième et quatrième zones (c, d) respectives avec des propriétés mécaniques différentes, qui ont à leur tour une densité différente l'une par rapport à l'autre et par rapport au corps externe (7).

2. Modèle pour l'enseignement dans des disciplines odontologiques selon la revendication 1, dans lequel les zones (a, b...) avec des propriétés mécaniques différentes compris par le modèle présentent également une couleur et/ou porosité et/ou élasticité et/ou flexibilité différentes.

3. Modèle pour l'enseignement dans des disciplines odontologiques selon la revendication 1 ou 2, dans lequel ladite structure (1) comprend également des moyens compatibles pour attacher celle-ci à un fantôme de pratique.

4. Modèle pour l'enseignement dans des disciplines odontologiques selon l'une quelconque des revendications précédentes, dans lequel chacune des dents (5) incorporées successivement les unes à l'intérieur des autres et au sein du corps externe (7) constituant les zones (a, b...) respectives avec des propriétés mécaniques différentes de la structure (1) ont également des couleurs différentes les unes des autres.

5. Modèle pour l'enseignement dans des disciplines odontologiques selon la revendication 4, dans lequel la structure (1) comprend :
- un corps externe polyédrique (7) à retirer, ayant une couleur et une densité différentes du reste, constituant une première zone (a) avec des propriétés mécaniques différentes,
- une dent à échelle 3X (5), incorporée au sein du corps externe (7), qui peut également être retirée avec des instruments de coupe, ayant une couleur et une densité différentes du reste, constituant une deuxième zone (b) avec des propriétés mécaniques différentes,
- une dent à échelle 2X (5), incorporée au sein de la dent à échelle 3X (5), qui peut être retirée avec des instruments de coupe, ayant à son tour une couleur et une densité différentes du reste, constituant une troisième zone (c) avec des propriétés mécaniques différentes, et
- une dent à échelle réelle (5), incorporée au sein de la dent à échelle 2X, ayant une couleur et une densité différentes du reste, constituant une quatrième zone (d) avec des propriétés mécaniques différentes.

6. Modèle pour l'enseignement dans des disciplines odontologiques selon la revendication 1, dans lequel, dans la variante pour apprendre l'ouverture de cavités et/ou de préparations dentaires prédéfinies, la structure (1) reproduit une seule dent (5) comprenant :
- une première zone (a) avec des propriétés mécaniques différentes, formant une partie à retirer (51) avec des instruments de coupe, ayant une couleur et une densité différentes du reste,
- une deuxième zone (b) avec des propriétés mécaniques différentes à préserver, et ayant une couleur et une densité différentes de la zone à retirer ci-dessus,
- une troisième zone (c) avec des propriétés mécaniques différentes, ayant une couleur et/ou une densité différentes du reste et constituant une partie intermédiaire (52) à préserver entre la partie à retirer (51) et la partie du reste de la dent (5) à préserver.

7. Modèle pour l'enseignement dans des disciplines odontologiques selon la revendication 1, dans lequel, dans la variante pour apprendre le retrait de tissu dentaire carieux, la structure (1) comprend :
- une partie à retirer (51) avec des instruments de coupe, ayant une densité et une consistance similaires à un tissu carieux, infecté, et affecté de manière irréversible, constituant la première zone (a) avec des propriétés mécaniques différentes,
- une partie du reste de la dent à préserver (5), ayant une densité similaire à une dent saine et différente de la densité de la zone de tissu carieux à retirer, constituant la deuxième zone (b) avec des propriétés mécaniques différentes,
- une partie intermédiaire (52) à préserver, ayant une densité et une consistance différentes du reste qui reproduit la zone de la lésion à préserver du fait de sa capacité à se récupérer, et constituant une troisième zone (c) avec des propriétés mécaniques différentes, et
- une partie de tissu pulpaire (53), ayant une densité et une consistance différentes du reste, reproduisant la couleur et la consistance de pulpe saine, constituant une quatrième zone (d) avec des propriétés mécaniques différentes.

8. Modèle pour l'enseignement dans des disciplines odontologiques selon la revendication 7, dans lequel ladite partie de tissu pulpaire (53) constituant cette quatrième zone (d) incorpore des capteurs (8) qui, lorsqu'ils sont reliés à un dispositif fourni à cet effet, enregistrent l'endommagement provoqué par des erreurs pendant le retrait de tissu dur de la partie à retirer (51) de la dent (5).

9. Modèle pour l'enseignement dans des disciplines odontologiques selon l'une quelconque des revendications 6 à 8, dans lequel la structure (1) est intégrée dans un fantôme, constituant une partie permanente de celui-ci ainsi que d'autres dents.
